# EUROPEAN PATENT SPECIFICATION

(11) **EP 2 713 272 B1**
(45) Date of publication and mention of the grant of the patent: **29.07.2020**
(21) Application number: 13735923.8
(22) Date of filing: 09.01.2013
(51) Int. Cl.: G06F 11/00, H04L 29/08

(54) **METHOD, DEVICE AND SYSTEM FOR PRESENTING AUGMENTED REALITY CONTENTS**
VERFAHREN, VORRICHTUNG UND SYSTEM ZUR DARSTELLUNG VON INHALTEN ERWEITERTER REALITÄT
PROCÉDÉ, DISPOSITIF ET SYSTÈME POUR PRÉSENTER DES CONTENUS DE RÉALITÉ AUGMENTÉE

(30) Priority: 10.01.2012 CN 201210006223
(43) Date of publication of application: 02.04.2014
(73) Proprietor: Huawei Device Co., Ltd., Dongguan, Guangdong 523808 (CN)
(72) Inventor: JIN, Zhihao, Shenzhen Guangdong 518129 (CN)
(74) Representative: Gill Jennings & Every LLP
(86) International application number: PCT/CN2013/070251
(87) International publication number: WO 2013/104304

(56) References cited:
- CN-A- 101 237 337
- CN-A- 101 794 298
- CN-A- 102 143 429
- US-A1- 2011 071 757
- US-B1- 6 470 378
- FADI CHEHIMI ET AL: "Augmented Reality 3D Interactive Advertisements on Smartphones", INTERNATIONAL CONFERENCE ON THE MANAGEMENT OF MOBILE BUSINESS, 2007 : ICMB 2007 ; 9 - 11 JULY 2007, TORONTO, ONTARIO, CANADA ; CONFERENCE PROCEEDINGS, IEEE COMPUTER SOCIETY, LOS ALAMITOS, CALIF. [U.A.], 1 July 2007 (2007-07-01), pages 21-21, XP031119396, ISBN: 978-0-7695-2803-8
- Federal Communication Comission: "Required Plug-ins, Players and Readers", , 1 April 2002 (2002-04-01), Retrieved from the Internet: URL:https://www.fcc.gov/general/required-p lug-ins-players-and-readers [retrieved on 2017-08-08]
- R.G. Gellens: "The Codecs and Profiles Parameters for "Bucket" Media Types", , 29 July 2011 (2011-07-29), Retrieved from the Internet: URL:https://tools.ietf.org/id/draft-gellen s-mime-bucket-bis-08.html#rfc.section.3 [retrieved on 2020-01-24]

## Description

### TECHNICAL FIELD

The present invention relates to the field of virtual reality technologies, and in particular, to a method, an apparatus, and a system for presenting augmented reality technology content.

### BACKGROUND

Augmented reality technology (Augmented Reality, referred to as AR) performs analog simulation, through technologies, on physical information (for example, visual information, sound, smell, and touch) that is hard to be experienced within a time span and space in the real world, and performs overlay in the real world for being perceived by human senses, so as to achieve a sense experience that transcends reality. For example, when taking a video or picture of a building through a camera, a user overlays an introduction of the building, or a name and contact information of the company owning the building on the video or picture. Further, for example, when shooting a sports car with a camera, a user overlays a three-dimensional view of an internal structure of the sports car on the image of the sports car.

In the AR technology of the prior art, a network server stores point of interest (Point Of Interest, referred to as POI) information, for example, longitude and latitude information of a hotel, and transportation, restaurant, and other information near the hotel. When a user terminal initiates an AR client set on the user terminal and obtains an identifier of the point of interest through the user terminal, the AR client uploads the obtained identifier of the point of interest to the network server, the network server sends the point of interest information corresponding to the identifier of the point of interest to the AR client, and the AR client presents AR content (for example, hotel booking information, restaurant menu and price, discount information of a mall, and a three dimensional view of an internal structure of an automobile) in the point of interest information for being used by the user terminal. When using the point of interest information, the user terminal the different user terminals are substantially different, so that the user terminal may run into an error when receiving point of interest information because the user terminal may not have a capability required for presenting AR content in the point of interest information.

A document US6470378 discloses a method for servicing a client. In the method, a request is received from a client having certain capabilities. This request is automatically satisfied in a manner tailored to the capabilities of the client.

Another document "Augmented Reality 3D Interactive Advertisement on Smartphones" discloses a system that allows complex and highly interactive visual 3D adverts to be viewed on mobile phones equipped with cameras. The 3D adverts are contained within a novel visual code design which allows the system to be without the requirement for additional network infrastructure making it both practical and affordable for advertisers. Document R.G. Gellens: "The Codecs and Profiles Parameters for "Bucket" Media Types", 29 July 2011 (2011-07-29), Retrieved from the internet:URL:https://tools.ietf.org/id/draft-gellens-mime-bucket-bis-08.html#rfc.section.3 labels content with the specific codecs indicated to render the contained media so that receiving systems can determine if the codecs are supported by the end system.

### SUMMARY

Embodiments of the present invention provide a method, an apparatus, and a system for presenting augmented reality technology (Augmented Reality, referred to as AR) content, so as to solve a problem in the prior art that that a user terminal may run into an error when receiving point of interest information because the user terminal may not have a capability required for presenting AR content in the point of interest information.

In order to achieve the above objectives, the embodiments of the present invention adopt the following technical solutions:
A method for presenting augmented reality technology as disclosed by claim 1.

A user terminal is described by claim 5.

A system for presenting AR content is described in claim 8.

In the method, the apparatus, and the system provided by the embodiments of the present invention, point of interest information is obtained, whether a user terminal has the corresponding capability is queried according to capability information corresponding to a capability required for presenting AR content in the point of interest information, and the AR content is hidden or the capability required for presenting the AR content is obtained if the user terminal does not have the capability required for presenting the AR content. By using the method, an error does not occur during running on the user terminal after the user terminal receives the point of interest information. Compared with the prior art, the embodiments of the present invention may solve the problem that, when the user terminal that needs to present the AR content runs the point of interest information after it receives the point of interest information, an error occurs because the user terminal does not have the capability required for presenting the AR content.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a method for presenting augmented reality technology AR content according to an embodiment of the present invention;
FIG. 2 is a flowchart of another method for presenting augmented reality technology AR content according to an embodiment of the present invention;
FIG. 3 is a schematic structural diagram 1 of a user terminal according to an embodiment of the present invention;
FIG. 4 is a schematic structural diagram 2 of a user terminal according to an embodiment of the present invention;
FIG. 5 is a schematic structural diagram of a system for presenting augmented reality technology AR content according to an embodiment of the present invention; and
FIG. 6 is a schematic structural diagram of a portable communication device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

In order to make advantages of the technical solutions of the present invention more comprehensible, a detailed description of the present invention is given below with reference to the accompanying drawings and embodiments.

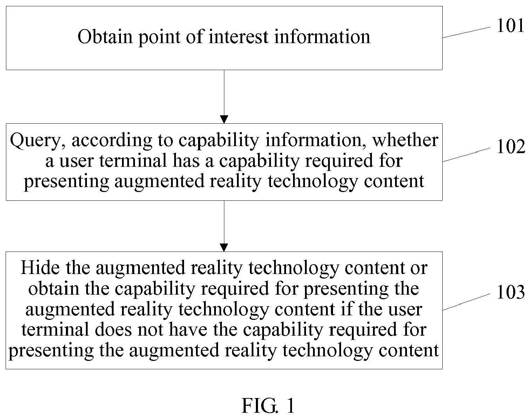

As shown in FIG. 1, a method for presenting augmented reality technology AR content provided by an embodiment of the present invention includes:
Step 101: Obtain point of interest information.

The point of interest information may include AR content and capability information corresponding to a capability required for presenting the AR content.

Here, the AR content refers to information related to the point of interest presented to a user in the AR technology, such as hotel book information, restaurant menu and price, discount information of a mall, and a three-dimensional diagram of an internal structure of an automobile.

Step 102: Query, according to the capability information, whether a user terminal has the capability required for presenting the AR content.

The having the capability required for presenting the AR content may include:
having the device capability that is required for presenting the AR content, where the device capability is enabled, or having a rendering capability required for presenting the AR content.

The device capability refers to that a user terminal owns corresponding devices (for example, a camera, a global positioning system, an acceleration sensor, a compass, and a radio frequency identification device), and the rendering capability refers to that the user terminal has a corresponding rendering imaging function (for example, a three-dimensional imaging function).

Step 103: Hide the AR content or obtain the capability required for presenting the AR content if the user terminal does not have the capability required for presenting the AR content.

The user terminal may be a cell phone, a computer, a tablet personal computer (Tablet Personal Computer, referred to as Tablet PC), and the like, but the present invention is not limited hereto.

In the method for presenting augmented reality technology AR content provided by the embodiment of the present invention, point of interest information is obtained, whether a user terminal has the corresponding capability is queried according to capability information corresponding to a capability required for presenting AR content in the point of interest information, and the AR content is hidden or the capability required for presenting the AR content is obtained if the user terminal does not have the capability required for presenting the AR content. By using the method, an error does not occur during running on the user terminal after the user terminal receives the point of interest information. Compared with the prior art, the embodiment of the present invention may solve the problem that, when the user terminal that needs to present the AR content runs the point of interest information after it receives the point of interest information, an error occurs because the user terminal does not have the capability required for presenting the AR content.

In order to make the embodiment of the present invention more comprehensible, the following describes the embodiment of the present invention in detail.

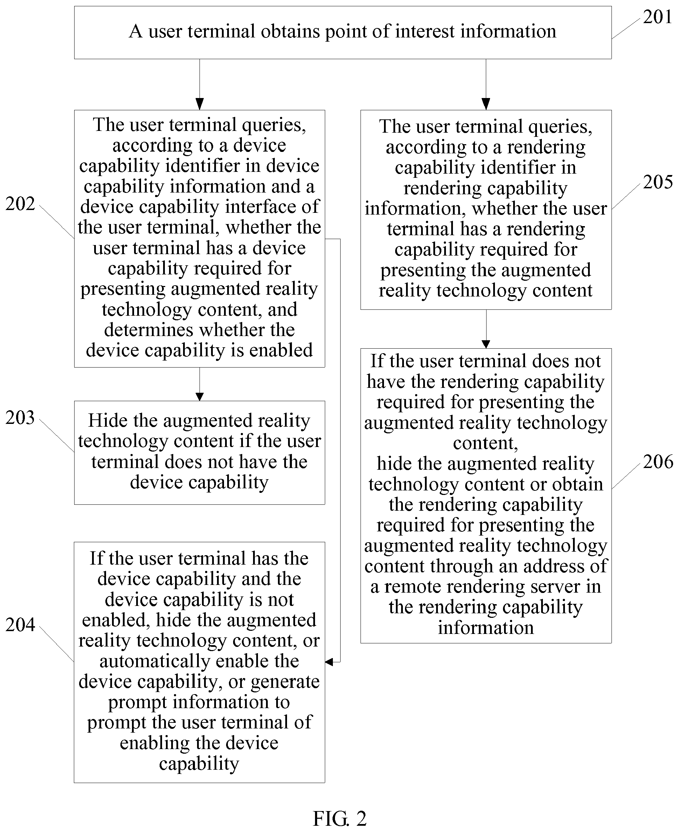

As shown in FIG. 2, a method for presenting augmented reality technology AR content provided by another embodiment of the present invention includes:
Step 201: A user terminal obtains point of interest information. Step 202 or 205 is executed.

The point of interest information includes AR content and capability information corresponding to a capability required for presenting the AR content.

The capability information includes device capability information corresponding to a device capability required for presenting the AR content or rendering capability information corresponding to a rendering capability required for presenting the AR content.

For example, point of interest information of restaurant 1 provides a check-in function, and the check-in function needs a radio frequency identification device. In that case, the device capability information may include the information about that the check-in function needs a radio frequency identification device and prompt information of enabling the radio frequency identification device. Further, for example, the point of interest information of restaurant 1 provides three-dimensional model display of restaurant 1, and the three-dimensional model display needs a three-dimensional imaging function. In that case, the rendering capability information may include the information about that presenting of the three-dimensional model display needs the three-dimensional imaging function and information of a remote rendering server, where the information of the remote rendering server may include an address of a server providing remote rendering, but the present invention is not limited hereto.

Specifically, obtaining point of interest information may be obtaining from an internal user terminal database of the user terminal, or may be obtaining by downloading from a server that saves the point of interest information, but the present invention is not limited hereto.

The database of the user terminal is downloaded, according to a user terminal demand, from the server that saves the point of interest information. For example, when a corresponding application program is installed, the user terminal downloads the application program from a server, where the application program may store a small amount of point of interest information, but the present invention is not limited hereto.

In an embodiment, a user terminal takes an image of the point of interest through a camera, positions and obtains location information of the user terminal through a global positioning system (Global Positioning System, GPS) or a base station, and uploads the image and the location information to a server. The server performs searching and matching according to the image and the location information, so as to obtain the identifier of the point of interest (for example, a name of the point of interest), obtains the point of interest information from stored point of interest information according to the identifier of the point of interest, and delivers the point of interest information to the user terminal.

Step 202: The user terminal queries, according to a device capability identifier in the device capability information and a device capability interface of the user terminal, whether the user terminal has a device capability required for presenting the AR content, and determines whether the device capability is enabled.

The device capability interface may be an interface provided by the user terminal, or a remote device management interface, such as an OMA DM interface used by a remote server to manage a network terminal, but the present invention is not limited hereto.

Step 203: Hide the AR content if the user terminal does not have the device capability.

Step 204: If the user terminal has the device capability and the device capability is not enabled, hide the AR content, or automatically enable the device capability, or generate prompt information to prompt the user terminal to enable the device capability.

For example, the point of interest information of restaurant 1 provides the check-in function, and the check-in function needs the radio frequency identification device, but the radio frequency identification device is not enabled, then multiple solutions may be adopted, for example, the check-in function may be hidden, so that a user does not apply the check-in function, or the radio frequency identification device is automatically enabled and the check-in function is applied after the radio frequency identification function is enabled, or a prompt information dialogue box is generated to prompt the user terminal to enable the radio frequency identification device, and the check-in function is applied after the user terminal selects to enable the radio frequency identification device, but the present invention is not limited hereto.

Step 205: The user terminal queries, according to a rendering capability identifier in the rendering capability information, whether the user terminal has the rendering capability required for presenting the AR content.

Step 206: If the user terminal does not have the rendering capability required for presenting the AR content, hide the AR content or obtain, through the address of the remote rendering server, the rendering capability required for presenting the AR content in the rendering capability information.

For example, the point of interest information of restaurant 1 provides the three-dimensional model display of restaurant 1, the three-dimensional model display needs the three-dimensional imaging function, but the user terminal does not have the three-dimensional imaging function, then multiple solutions may be adopted, for example, the three-dimensional model display function may be hidden, so that the user does not apply the three-dimensional model display function, or through the address of the remote rendering server in the point of interest information, the three-dimensional imaging function is downloaded from the address of the remote rendering server or three-dimensional imaging is directly performed on the address of the remote rendering server, but the present invention is not limited hereto.

In the method for presenting augmented reality technology AR content provided by another embodiment of the present invention, point of interest information is obtained, whether a user terminal has the corresponding capability is queried according to capability information corresponding to a capability required for presenting AR content in the point of interest information, and the AR content is hidden or the capability required for presenting the AR content is obtained if the user terminal does not have the capability required for presenting the AR content. By using the method, an error does not occur during running on the user terminal after the user terminal receives the point of interest information. Compared with the prior art, the embodiment of the present invention may solve the problem that, when the user terminal that needs to present the AR content runs the point of interest information after it receives the point of interest information, an error occurs because the user terminal does not have the capability required for presenting the AR content.

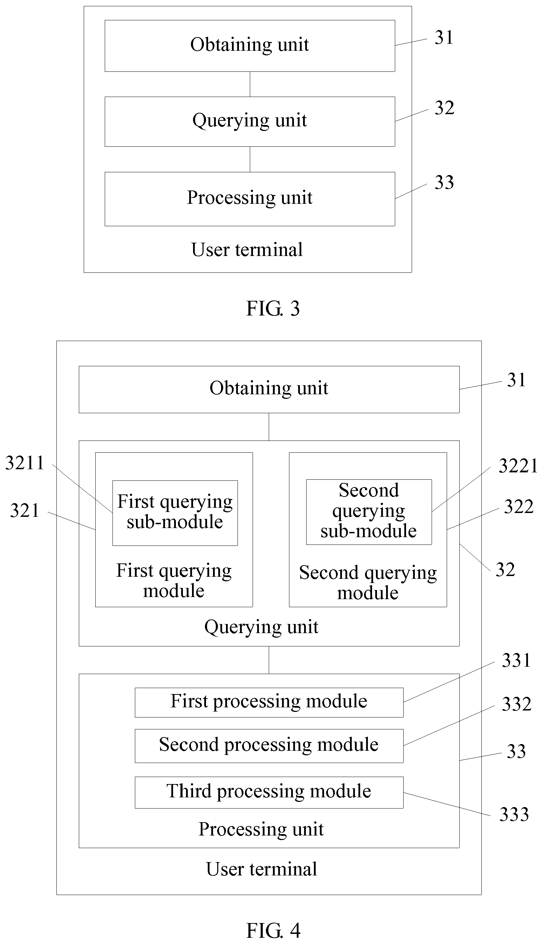

As shown in FIG. 3, a user terminal provided by an embodiment of the present invention includes:
an obtaining unit 31, configured to obtain point of interest information, where
the point of interest information includes AR content and capability information corresponding to a capability required for presenting the AR content; reference may be made to step 101 shown in FIG. 1 for a specific implementation manner, which is not described again herein;
a querying unit 32, configured to query, according to the capability information, whether a user terminal has the capability required for presenting the AR content; reference may be made to step 102 shown in FIG. 1 for a specific implementation manner, which is not described again herein; and
a processing unit 33, configured to hide the AR content or obtain the capability required for presenting the AR content if the user terminal does not have the capability required for presenting the AR content; reference may be made to step 103 shown in FIG. 1 for a specific implementation manner, which is not described again herein.

Furthermore, as shown in FIG. 4, the querying unit 32 includes:
a first querying module 321, configured to query, according to device capability information, whether the user terminal has a device capability required for presenting the AR content and whether the device capability is enabled; reference may be made to step 202 shown in FIG. 2 for a specific implementation manner, which is not described again herein; and
a second querying unit 322, configured to query, according to rendering capability information, whether the user terminal has a rendering capability required for presenting the AR content; reference may be made to step 205 shown in FIG. 2 for a specific implementation manner, which is not described again herein.

Furthermore, as shown in FIG. 4, the first querying module 321 includes:
a first querying sub-module 3211, configured to query, according to a device capability identifier in the device capability information and a device capability interface of the user terminal, whether the user terminal has the device capability required for presenting the AR content, and determines whether the device capability is enabled; reference may be made to step 202 shown in FIG. 2 for a specific implementation manner, which is not described again herein.

The processing unit 33 includes:
a first processing module 331, configured to hide the AR content if the user terminal does not have the device capability; reference may be made to step 203 shown in FIG. 2 for a specific implementation manner, which is not described again herein; and
a second processing module 332, configured to: if the user terminal has the device capability and the device capability is not enabled, hide the AR content, or automatically enable the device capability, or generate prompt information to prompt the user terminal to enable the device capability; reference may be made to step 204 shown in FIG. 2 for a specific implementation manner, which is not described again herein.

Furthermore, as shown in FIG. 4, the second querying module 322 includes:
a second querying sub-module 3221, configured to query, according to the rendering capability identifier, whether the user terminal has the rendering capability required for presenting the AR content; reference may be made to step 205 shown in FIG. 2 for a specific implementation manner, which is not described again herein.

The processing unit 33 further includes:
a third processing module 333, configured to: if the user terminal does not have the rendering capability required for presenting the AR content, hide the AR content or obtain the rendering capability required for presenting the AR content through an address of a remote rendering server; reference may be made to step 206 shown in FIG. 2 for a specific implementation manner, which is not described again herein.

It should be noted that during practical application, the user terminal provided by the embodiment of the present invention may specifically be a computer (for example, a laptop PC, laptop PC), a cell phone (for example, a smartphone), a tablet personal computer (Tablet Personal Computer, referred to as Tablet PC), and the like, but the present invention is not limited hereto.

In the user terminal provided by the embodiment of the present invention, an obtaining unit obtains point of interest information, a querying unit queries, according to capability information corresponding to a capability required for presenting AR content in the point of interest information, whether a user terminal has a corresponding capability, and a processing unit hides the AR content or obtains the capability required for presenting the AR content if the user terminal does not have the capability required for presenting the AR content. Therefore, an error does not occur during running on the user terminal after the user terminal receives the point of interest information. Compared with the prior art, the embodiment of the present invention may solve the problem that, when the user terminal that needs to present the AR content runs the point of interest information after it receives the point of interest information, an error occurs because the user terminal does not have the capability required for presenting the AR content.

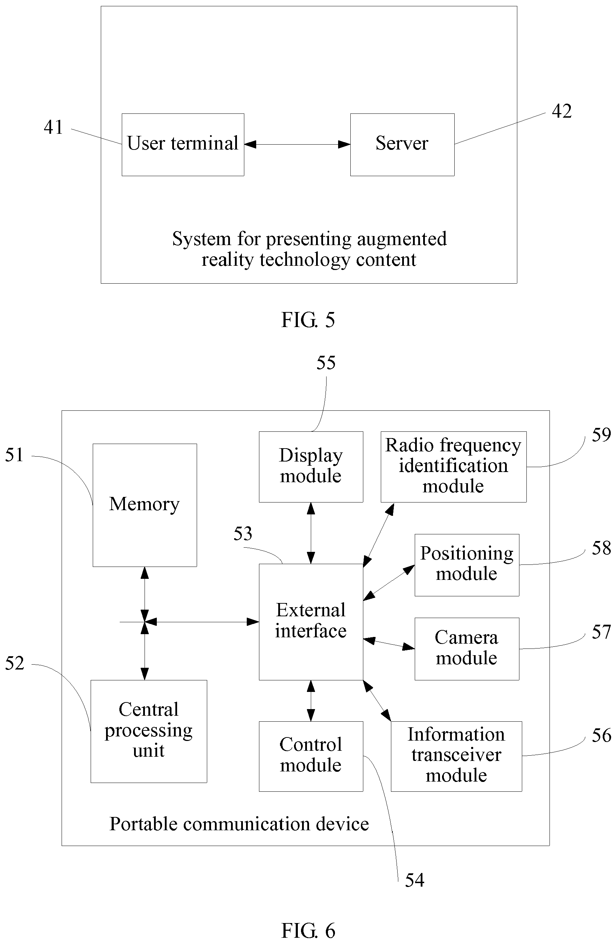

As shown in FIG. 5, a system for presenting augmented reality technology AR content provided by an embodiment of the present invention includes the user terminal 41, and a server 42 configured to enable the user terminal 41 to download point of interest information. Reference may be made to the specific implementation of the user terminal for a specific embodiment of the user terminal, which is not described again herein.

In the system for presenting augmented reality technology AR content provided by the embodiment of the present invention, a user terminal obtains point of interest information through the server, queries, according to capability information corresponding to a capability required for presenting AR content in the point of interest information, whether the user terminal has the corresponding capability, and hides the AR content or obtains the capability required for presenting the AR content if the user terminal does not have the capability required for presenting the AR content. Therefore, an error does not occur during running on the user terminal after the user terminal receives the point of interest information. Compared with the prior art, the embodiment of the present invention may solve the problem that, when the user terminal that needs to present the AR content runs the point of interest information after it receives the point of interest information, an error occurs because the user terminal does not have the capability required for presenting the AR content.

A detailed physical apparatus is provided below to explain the present invention, and details are described in the detailed explanation. However, a person skilled in the art obviously knows that the present invention may be implemented without these details, and that a well-known method, process, component, circuit, and network are not described in detail in other cases, so as to avoid making all aspects of implementation unnecessarily unclear.

A portable communication device with a camera module is taken as an example for detailed description, as shown in FIG. 6, the device includes: a memory 51, a central processing unit 52, an external interface 53, a control module 54, and a display module 55.

It should be understood that the portable communication device provided by this embodiment is only an example of a user terminal, the user terminal in the present invention may have more or less components than that shown in FIG. 6, and may have different arrangements or sets of the components, each component may be implemented in hardware that includes one or more signal processing and/or application-specific integrated circuit, or software, or a combination of hardware and software.

As shown in FIG. 6, the portable communication device provided by the embodiment of the present invention is described in detail below.

The portable communication device exchanges information with a server through an information transceiver module 56 connected to the external interface 53, for example, the portable communication device needs to apply an application program used to present augmented reality technology AR content, the portable communication device downloads the application program from the server through the information transceiver module 56, where the application program may store a great amount of point of interest information that presents AR content. After processing of the central processing unit 52, the communication device stores the application program and the point of interest information in the memory 51.

When the communication device controls and applies, through the control module 54, the application program that presents the AR content, for example, shoots a point of interest through a camera module 57 connected to the external interface 53, or positions and determines the point of interest through a positioning module 58 connected to the external interface 53. In an embodiment, the communication device takes an image of the point of interest through a camera, positions and obtains location information of the user terminal through a global positioning system (Global Positioning System, GPS) or a base station, and uploads the image and the location information to the server. The server performs searching and matching according to the image and the location information, so as to obtain an identifier of the point of interest (for example, a name of the point of interest), obtains, according to the identifier of the point of interest, the point of interest information from stored point of interest information, and delivers the point of interest information to the communication device. The point of interest information is obtained after the point of interest is sent to the central processing unit 52 to process and invoke the point of interest information in the memory 51, or the central processing unit 52 provides for the information transceiver module 56 an instruction that the point of interest is downloaded from the server.

After obtaining the point of interest information, the central processing unit 52 queries whether the portable communication device has the corresponding capability through the external interface 53 by processing and analyzing the content of the point of interest information (the point of interest information includes basic application information and rendering capability information and/or device capability information).

For example, a device capability (for example, a radio frequency identification module 59 connected to the external interface 53) is required for presenting the AR content if the radio frequency identification module 59 is not enabled, the central processing unit 52 invokes an enabling radio frequency identification identifier in the point of interest information, and displays the identifier through a display module 55 connected to the external interface 53 for prompting, or the central processing unit 52 directly enables the radio frequency identification module 59, or the central processing unit 52 hides the AR content.

Further, for example, a rendering capability (for example, a three-dimensional imaging capability) is required for presenting the AR content if there is no corresponding three-dimensional imaging capability, the central processing unit 52 invokes remote rendering capability information (for example, a connection address of a server that provides a remote rendering capability) in the point of interest information, displays, through the display module 55, the connection address of the server that provides the remote rendering capability, or the central processing unit 52 directly hides the AR content.

In the portable communication device provided by the embodiment of the present invention, a point of interest is shot by a camera module, a location of the point of interest is positioned and determined by a positioning system module, a central processing unit obtains point of interest information corresponding to an identifier of the point of interest from a memory by processing the identifier of the point of interest or by connecting to the server through the information transceiver module, the central processing unit analyzes the point of interest information and queries whether the portable communication device has a capability required for presenting the AR content, and hides the AR content or obtains the capability required for presenting the AR content if the portable communication device does not have the capability required for presenting the AR content. Therefore, an error does not occur during running on the user terminal after the user terminal receives the point of interest information. Compared with the prior art, the embodiment of the present invention may solve the problem that, when the user terminal that needs to present the AR content runs the point of interest information after it receives the point of interest information, an error occurs because the user terminal does not have the capability required for presenting the AR content.

Through the foregoing description of the embodiments, it is clear to a person skilled in the art that the present invention may be implemented by software plus necessary universal hardware, and definitely may also be implemented by hardware, but in many cases, the software implementation is preferred. Based on such an understanding, the technical solutions of the present invention essentially, or the part contributing to the prior art may be implemented in a form of a software product. The computer software product is stored in a readable storage medium, for example, a floppy disk, a hard disk, or an optical disc of the computer, and includes several instructions for instructing a computer device (which may be a personal computer, a server, or a network device) to perform the methods described in the embodiments of the present invention.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for presenting augmented reality technology AR content, comprising:
obtaining (101), by an obtaining unit (31) of a user terminal, point of interest information, wherein the point of interest information comprises AR content and capability information corresponding to a capability required for presenting the AR content;
**characterized by** further comprising:
querying (102), by a querying unit (32) of the user terminal, according to the capability information, whether the user terminal has the capability required for presenting the AR content; and
hiding (103), by a processing unit (33) of the user terminal, the AR content if the user terminal does not have the capability required for presenting the AR content,
wherein the capability information comprises: device capability information corresponding to a device capability required for presenting the AR content or rendering capability information corresponding to a rendering capability required for presenting the AR content;
the having the capability required for presenting the AR content comprises:
having the device capability that is required for presenting the AR content, where the device capability is enabled; and/or
having the rendering capability required for presenting the AR content.

2. The method according to claim 1, the querying (102), according to the capability information, whether a user terminal has the capability required for presenting the AR content specifically comprises:
querying (202), by a first querying module (321) of the user terminal, according to the device capability information, whether the user terminal has the device capability required for presenting the AR content and whether the device capability is enabled, wherein the first querying module (321) is a module of the querying unit (32); and/or
querying (205), by a second querying module (322) of the user terminal, according to the rendering capability information, whether the user terminal has the rendering capability required for presenting the AR content, wherein the second querying module (322) is a module of the querying unit (32).

3. The method according to claim 2, wherein the device capability information comprises a device capability identifier;
the querying (202), according to the device capability information, whether the user terminal has the device capability required for presenting the AR content and whether the device capability is enabled comprises:
querying (202), by a first querying sub-module (3211) of the first querying module (321) of the user terminal, according to the device capability identifier and a device capability interface of the user terminal, whether the user terminal has the device capability required for presenting the AR content, and determining whether the device is enabled; and
the hiding (103) the AR content or obtaining the capability required for presenting the AR content if the user terminal does not have the capability required for presenting the AR content specifically comprises:
hiding (203), by a first processing module (331) of the processing unit (33) of the user terminal, the AR content if the user terminal does not have the device capability; and
if the user terminal has the device capability and the device capability is not enabled, hiding (204), by a second processing module (332) of the processing unit (33) of the user terminal, the AR content, or automatically enabling the device capability, or generating prompt information to prompt the user terminal to enable the device capability.

4. The method according to claim 2, wherein the rendering capability information comprises a rendering capability identifier and remote rendering capability information that is corresponding to the rendering capability, wherein the remote rendering capability information comprises an address of a remote rendering server;
the querying (205), according to the rendering capability information, whether the user terminal has the rendering capability required for presenting the AR content comprises:
querying (205), by a second querying sub-module (3221) of the first querying module (322) of the user terminal, according to the rendering capability identifier, whether the user terminal has the rendering capability required for presenting the AR content; and
the hiding (103) the AR content or obtaining the capability required for presenting the AR content if the user terminal does not have the capability required for presenting the AR content specifically comprises:
if the user terminal does not have the rendering capability required for presenting the AR content, hiding (206), by a third processing module (333) of the processing unit (33) of the user terminal, the AR content or obtaining, through the address of the remote rendering server, the rendering capability required for presenting the AR content.

5. A user terminal, comprising:
an obtaining unit (31), configured to obtain point of interest information, wherein the point of interest information comprises AR content and capability information corresponding to a capability required for presenting the AR content;
**characterized by** further comprising:
a querying unit (32), configured to query, according to the capability information, whether a user terminal has the capability required for presenting the AR content; and
a processing unit (32), configured to hide the AR content if the user terminal does not have the capability required for presenting the AR content,
wherein the capability information comprises: device capability information corresponding to a device capability required for presenting the AR content and/or rendering capability information corresponding to a rendering capability required for presenting the AR content; and
the querying unit (32) comprises:
a first querying module (321), configured to query, according to the device capability information, whether the user terminal has the device capability required for presenting the AR content and whether the device capability is enabled; and/or
a second querying unit (322), configured to query, according to the rendering capability information, whether the user terminal has the rendering capability required for presenting the AR content.

6. The user terminal according to claim 5, wherein the device capability information comprises a device capability identifier, and
the first querying module (321) comprises:
a first querying sub-module (3211), configured to query, according to the device capability identifier and a device capability interface of the user terminal, whether the user terminal has the device capability required for presenting the AR content, and determine whether the device is enabled; and
the processing unit (33) comprises:
a first processing module (331), configured to hide the AR content if the user terminal does not have the device capability; and
a second processing module (332), configured to: if the user terminal has the device capability and the device capability is not enabled, hide the AR content, or automatically enable the device capability, or generate prompt information to prompt the user terminal to enable the device capability.

7. The user terminal according to claim 5, wherein the rendering capability information comprises a rendering capability identifier and remote rendering capability information that is corresponding to the rendering capability, wherein the remote rendering capability information comprises an address of a remote rendering server;
the second querying module (322) comprises:
a second querying sub-module (3221), configured to query, according to the rendering capability identifier, whether the user terminal has the rendering capability required for presenting the AR content; and
the processing unit (33) comprises:
a third processing module (333), configured to: if the user terminal does not have the rendering capability required for presenting the AR content, hide the AR content or obtain, through the address of the remote rendering server, the rendering capability required for presenting the AR content.

8. A system for presenting augmented reality technology AR content, comprising the user terminal (41) according to any one of claims 5 to 7 and a server (42) configured to enable the user terminal to download point of interest information.

## Patentansprüche

1. Verfahren für die Darstellung von Inhalten erweiterter Realitätstechnologie AR ("Augmented Reality Technology"), umfassend:
Erhalten (101) von "Point-of-Interest"-Informationen durch eine Erhaltungseinheit (31) eines Benutzerendgerätes, wobei die "Point-of-Interest"-Informationen einen AR-Inhalt und Fähigkeitsinformationen umfassen, die einer für die Darstellung des AR-Inhalts erforderlichen Fähigkeit entsprechen;
**dadurch gekennzeichnet, dass** es ferner umfasst:
Abfragen (102), durch eine Abfrageeinheit (32) des Benutzerendgerätes gemäß den Fähigkeitsinformationen, ob das Benutzerendgerät die für die Darstellung des AR-Inhalts erforderliche Fähigkeit besitzt; und
Verbergen (103) des AR-Inhalts durch eine Verarbeitungseinheit (33) des Benutzerendgerätes, wenn das Benutzerendgerät nicht die für die Darstellung des AR-Inhalts erforderliche Fähigkeit besitzt,
wobei die Fähigkeitsinformationen umfassen: Vorrichtungsfähigkeitsinformationen, die einer für die Darstellung des AR-Inhalts erforderlichen Vorrichtungsfähigkeit entsprechen, oder Renderingfähigkeitsinformationen, die einer für die Darstellung des AR-Inhalts erforderlichen Renderingfähigkeit entsprechen;
das Besitzen der für die Darstellung des AR-Inhalts erforderlichen Fähigkeit umfasst:
Besitzen der für die Darstellung des AR-Inhalts erforderlichen Vorrichtungsfähigkeit, wenn die Vorrichtungsfähigkeit aktiviert ist; und/oder
Besitzen der für die Darstellung des AR-Inhalts erforderlichen Renderingfähigkeit.

2. Verfahren nach Anspruch 1, wobei das Abfragen (102), gemäß den Fähigkeitsinformationen, ob ein Benutzerendgerät die für die Darstellung des AR-Inhalts erforderliche Fähigkeit besitzt, insbesondere umfasst:
Abfragen (202), durch ein erstes Abfragemodul (321) des Benutzerendgerätes gemäß den Vorrichtungsfähigkeitsinformationen, ob das Benutzerendgerät die für die Darstellung des AR-Inhalts erforderliche Vorrichtungsfähigkeit besitzt, und ob die Vorrichtungsfähigkeit aktiviert ist, wobei das erste Abfragemodul (321) ein Modul der Abfrageeinheit (32) ist; und/oder
Abfragen (205), durch ein zweites Abfragemodul (322) des Benutzerendgerätes gemäß den Renderingfähigkeitsinformationen, ob das Benutzerendgerät die für die Darstellung des AR-Inhalts erforderliche Renderingfähigkeit besitzt, wobei das zweite Abfragemodul (322) ein Modul der Abfrageeinheit (32) ist.

3. Verfahren nach Anspruch 2, wobei die Vorrichtungsfähigkeitsinformationen einen Vorrichtungsfähigkeitsidentifikator umfassen;
das Abfragen (202), gemäß den Vorrichtungsfähigkeitsinformationen, ob das Benutzerendgerät die für die Darstellung des AR-Inhalts erforderliche Vorrichtungsfähigkeit besitzt, und ob die Vorrichtungsfähigkeit aktiviert ist, umfasst: Abfragen (202), durch ein erstes Abfrageuntermodul (3211) des ersten Abfragemoduls (321) des Benutzerendgerätes gemäß dem Vorrichtungsfähigkeitsidentifikator und einer Vorrichtungsfähigkeitsschnittstelle des Benutzerendgerätes, ob das Benutzerendgerät die für die Darstellung des AR-Inhalts erforderliche Vorrichtungsfähigkeit besitzt, und Bestimmen, ob die Vorrichtung aktiviert ist; und
das Verbergen (103) des AR-Inhalts oder Erhalten der für die Darstellung des AR-Inhalts erforderlichen Fähigkeit, wenn das Benutzerendgerät nicht die für die Darstellung des AR-Inhalts erforderliche Fähigkeit besitzt, insbesondere umfasst:
Verbergen (203), durch ein erstes Verarbeitungsmodul (331) der Verarbeitungseinheit (33) des Benutzerendgerätes, des AR-Inhalts, wenn das Benutzerendgerät nicht die Vorrichtungsfähigkeit besitzt; und
wenn das Benutzerendgerät die Vorrichtungsfähigkeit besitzt und die Vorrichtungsfähigkeit nicht aktiviert ist, Verbergen (204), durch ein zweites Verarbeitungsmodul (332) der Verarbeitungseinheit (33) des Benutzerendgeräts, des AR-Inhalts oder automatisches Aktivieren der Vorrichtungsfähigkeit oder Erzeugen von Aufforderungsinformationen, um das Benutzerendgerät aufzufordern, die Vorrichtungsfähigkeit zu aktivieren.

4. Verfahren nach Anspruch 2, wobei die Renderingfähigkeitsinformationen einen Renderingfähigkeitsidentifikator und Fernrenderingfähigkeitsinformationen umfassen, die der Renderingfähigkeit entsprechen, wobei die Fernrenderingfähigkeitsinformationen eine Adresse eines Fernrenderingservers umfassen;
das Abfragen (205), gemäß den Renderingfähigkeitsinformationen, ob das Benutzerendgerät die für die Darstellung des AR-Inhalts erforderliche Renderingfähigkeit besitzt, umfasst:
Abfragen (205), durch ein zweites Abfrageuntermodul (3221) des ersten Abfragemoduls (322) des Benutzerendgerätes gemäß dem Renderingfähigkeitsidentifikator, ob das Benutzerendgerät die für die Darstellung des AR-Inhalts erforderliche Renderingfähigkeit besitzt; und
das Verbergen (103) des AR-Inhalts oder das Erhalten der für die Darstellung des AR-Inhalts erforderlichen Fähigkeit, wenn das Benutzerendgerät nicht die für die Darstellung des AR-Inhalts erforderliche Fähigkeit besitzt, insbesondere umfasst:
wenn das Benutzerendgerät nicht die für die Darstellung des AR-Inhalts erforderliche Renderingfähigkeit besitzt, Verbergen (206), durch ein drittes Verarbeitungsmodul (333) der Verarbeitungseinheit (33) des Benutzerendgeräts, des AR-Inhalts oder Erhalten, über die Adresse des Fernrenderingservers, der für die Darstellung des AR-Inhalts erforderlichen Renderingfähigkeit.

5. Benutzerendgerät, umfassend:
eine Erfassungseinheit (31), die dazu konfiguriert ist, "Point-of-Interest"-Informationen zu erhalten, wobei die "Point-of-Interest"-Informationen AR-Inhalts- und Fähigkeitsinformationen umfassen, die einer für die Darstellung des AR-Inhalts erforderlichen Fähigkeit entsprechen;
**dadurch gekennzeichnet, dass** es ferner umfasst:
eine Abfrageeinheit (32), die dazu konfiguriert ist, gemäß den Fähigkeitsinformationen abzufragen, ob ein Benutzerendgerät die für die Darstellung des AR-Inhalts erforderliche Fähigkeit besitzt; und
eine Verarbeitungseinheit (32), die dazu konfiguriert ist, den AR-Inhalt zu verbergen, wenn das Benutzerendgerät nicht die für die Darstellung des AR-Inhalts erforderliche Fähigkeit besitzt,
wobei die Fähigkeitsinformationen umfassen: Vorrichtungsfähigkeitsinformationen, die einer für die Darstellung des AR-Inhalts erforderlichen Vorrichtungsfähigkeit entsprechen, und/oder Renderingfähigkeitsinformationen, die einer für die Darstellung des AR-Inhalts erforderlichen Renderingfähigkeit entsprechen; und
die Abfrageeinheit (32) umfasst:
ein erstes Abfragemodul (321), das dazu konfiguriert ist, gemäß den Vorrichtungsfähigkeitsinformationen abzufragen, ob das Benutzerendgerät die für die Darstellung des AR-Inhalts erforderliche Vorrichtungsfähigkeit besitzt und ob die Vorrichtungsfähigkeit aktiviert ist; und/oder
eine zweite Abfrageeinheit (322), die dazu konfiguriert ist, gemäß den Renderingfähigkeitsinformationen abzufragen, ob das Benutzerendgerät die für die Darstellung des AR-Inhalts erforderliche Renderingfähigkeit besitzt.

6. Benutzerendgerät nach Anspruch 5, wobei die Vorrichtungsfähigkeitsinformationen einen Vorrichtungsfähigkeitsidentifikator umfassen, und
das erste Abfragemodul (321) umfasst:
ein erstes Abfrageuntermodul (3211), das dazu konfiguriert ist, gemäß dem Vorrichtungsfähigkeitsidentifikator und einer Vorrichtungsfähigkeitsschnittstelle des Benutzerendgerätes abzufragen, ob das Benutzerendgerät die für die Darstellung des AR-Inhalts erforderliche Vorrichtungsfähigkeit besitzt, und zu bestimmen, ob die Vorrichtung aktiviert ist; und
die Verarbeitungseinheit (33) umfasst:
ein erstes Verarbeitungsmodul (331), das dazu konfiguriert ist, den AR-Inhalt zu verbergen, wenn das Benutzerendgerät nicht die Vorrichtungsfähigkeit besitzt; und ein zweites Verarbeitungsmodul (332), das dazu konfiguriert ist, wenn das Benutzerendgerät die Vorrichtungsfähigkeit besitzt und die Vorrichtungsfähigkeit nicht aktiviert ist, den AR-Inhalt zu verbergen oder die Vorrichtungsfähigkeit automatisch zu aktivieren oder Aufforderungsinformationen zu erzeugen, um das Benutzerendgerät aufzufordern, die Vorrichtungsfähigkeit zu aktivieren.

7. Benutzerendgerät nach Anspruch 5, wobei die Renderingfähigkeitsinformationen einen Renderingfähigkeitsidentifikator und Fernrenderingfähigkeitsinformationen umfassen, die der Renderingfähigkeit entsprechen, wobei die Fernrenderingfähigkeitsinformationen eine Adresse eines Fernrenderingservers umfassen;
das zweite Abfragemodul (322) umfasst:
ein zweites Abfrageuntermodul (3221), das dazu konfiguriert ist, gemäß dem Renderingfähigkeitsidentifikator abzufragen, ob das Benutzerendgerät die für die Darstellung des AR-Inhalts erforderliche Renderingfähigkeit besitzt; und
die Verarbeitungseinheit (33) umfasst:
ein drittes Verarbeitungsmodul (333), das dazu konfiguriert ist, wenn das Benutzerendgerät nicht die für die Darstellung des AR-Inhalts erforderliche Renderingfähigkeit besitzt, den AR-Inhalt zu verbergen oder über die Adresse des Fernrenderingservers die für die Darstellung des AR-Inhalts erforderliche Renderingfähigkeit zu erhalten.

8. System für die Darstellung von Inhalten der erweiterten Realitätstechnologie AR, das das Benutzerendgerät (41) nach einem der Ansprüche 5 bis 7 und einen Server (42) umfasst, der dazu konfiguriert ist, das Benutzerendgerät dahingehend zu aktivieren, "Point-of-Interest"-Informationen herunterzuladen.

## Revendications

1. Procédé de présentation d'un contenu de technologie de réalité augmentée, AR, comprenant de :
obtenir (101), par une unité d'obtention (31) d'un terminal d'utilisateur, des informations de point d'intérêt, dans lequel les informations de point d'intérêt comprennent un contenu AR et des informations de capacité correspondant à une capacité requise pour la présentation du contenu AR ;
**caractérisé en ce qu'**il comprend en outre de :
interroger (102), par une unité d'interrogation (32) du terminal d'utilisateur, en fonction des informations de capacité, pour savoir si le terminal d'utilisateur a la capacité requise pour présenter le contenu AR ; et
cacher (103), par une unité de traitement (33) du terminal d'utilisateur, le contenu AR si le terminal d'utilisateur n'a pas la capacité requise pour présenter le contenu AR,
dans lequel les informations de capacité comprennent : des informations de capacité de dispositif correspondant à une capacité de dispositif requise pour présenter le contenu AR ou des informations de capacité de rendu correspondant à une capacité de rendu requise pour présenter le contenu AR ;
le fait d'avoir la capacité requise pour présenter le contenu AR comprend de :
avoir la capacité de dispositif qui est requise pour présenter le contenu AR, lorsque la capacité de dispositif est activée ; et/ou
avoir la capacité de rendu requise pour présenter le contenu AR

2. Procédé selon la revendication 1, l'interrogation (102), en fonction des informations de capacité, relative au fait de savoir si un terminal d'utilisateur a la capacité requise pour présenter le contenu AR comprend spécifiquement de :
interroger (202), par un premier module d'interrogation (321) du terminal d'utilisateur, en fonction des informations de capacité de dispositif, pour savoir si le terminal d'utilisateur a la capacité de dispositif requise pour présenter le contenu AR et si la capacité de dispositif est activée, dans lequel le premier module d'interrogation (321) est un module de l'unité d'interrogation (32) ; et/ou
interroger (205), par un deuxième module d'interrogation (322) du terminal d'utilisateur, en fonction des informations de capacité de rendu, pour savoir si le terminal d'utilisateur a la capacité de rendu requise pour présenter le contenu AR, dans lequel le deuxième module d'interrogation (322) est un module de l'unité d'interrogation (32).

3. Procédé selon la revendication 2, dans lequel les informations de capacité de dispositif comprennent un identificateur de capacité de dispositif;
l'interrogation (202), en fonction des informations de capacité de dispositif, relative au fait de savoir si le terminal d'utilisateur a la capacité de dispositif requise pour présenter le contenu AR et si la capacité de dispositif est activée comprend de :
interroger (202), par un premier sous-module d'interrogation (3211) du premier module d'interrogation (321) du terminal d'utilisateur, en fonction de l'identificateur de capacité de dispositif et d'une interface de capacité de dispositif du terminal d'utilisateur, pour savoir si le terminal d'utilisateur a la capacité de dispositif requise pour présenter le contenu AR, et déterminer si le dispositif est activé ; et
le cachement (103) du contenu AR ou l'obtention de la capacité requise pour présenter le contenu AR si le terminal d'utilisateur n'a pas la capacité requise pour présenter le contenu AR comprend spécifiquement de :
cacher (203), par un premier module de traitement (331) de l'unité de traitement (33) du terminal d'utilisateur, le contenu AR si le terminal d'utilisateur n'a pas la capacité de dispositif; et
si le terminal d'utilisateur a la capacité de dispositif et la capacité de dispositif n'est pas activée, cacher (204), par un deuxième module de traitement (332) de l'unité de traitement (33) du terminal d'utilisateur, le contenu AR, ou activer automatiquement la capacité de dispositif, ou générer des informations d'invite pour inviter un terminal d'utilisateur à activer la capacité de dispositif.

4. Procédé selon la revendication 2, dans lequel les informations de capacité de rendu comprennent un identificateur de capacité de rendu et des informations de capacité de rendu à distance qui correspondent à la capacité de rendu, dans lequel les informations de capacité de rendu à distance comprennent une adresse d'un serveur de rendu à distance ;
l'interrogation (205), en fonction des informations de capacité de rendu, relative au fait de savoir si le terminal d'utilisateur a la capacité de rendu requise pour présenter le contenu AR comprend de :
interroger (205), par un deuxième sous-module d'interrogation (3221) du premier module d'interrogation (322) du terminal d'utilisateur, en fonction de l'identificateur de capacité de rendu, pour savoir si le terminal d'utilisateur a la capacité de rendu requise pour présenter le contenu AR ; et
le cachement (103) du contenu AR ou l'obtention de la capacité requise pour présenter le contenu AR si le terminal d'utilisateur n'a pas la capacité requise pour présenter le contenu AR comprend spécifiquement de :
si le terminal d'utilisateur n'a pas la capacité de rendu requise pour présenter le contenu AR, cacher (206), par un troisième module de traitement (333) de l'unité de traitement (33) du terminal d'utilisateur, le contenu AR, ou obtenir, par l'adresse du serveur de rendu à distance, la capacité de rendu requise pour présenter le contenu AR

5. Terminal d'utilisateur comprenant :
une unité d'obtention (31), configurée pour obtenir des informations de point d'intérêt, dans lequel les informations de point d'intérêt comprennent un contenu AR et des informations de capacité correspondant à une capacité requise pour présenter le contenu AR ;
**caractérisé en ce qu'**il comprend en outre de :
une unité d'interrogation (32), configurée pour interroger, en fonction des informations de capacité, pour savoir si un terminal d'utilisateur a la capacité requise pour présenter le contenu AR ; et
une unité de traitement (32), configurée pour cacher le contenu AR si le terminal d'utilisateur n'a pas la capacité requise pour présenter le contenu AR,
dans lequel les informations de capacité comprennent : des informations de capacité de dispositif correspondant à une capacité de dispositif requise pour présenter le contenu AR et/ou des informations de capacité de rendu correspondant à une capacité de rendu requise pour présenter le contenu AR ; et
l'unité d'interrogation (32) comprend :
un premier module d'interrogation (321), configuré pour interroger, en fonction des informations de capacité de dispositif, pour savoir si le terminal d'utilisateur a la capacité de dispositif requise pour présenter le contenu AR et si la capacité de dispositif est activée ; et/ou
une deuxième unité d'interrogation (322), configurée pour interroger, en fonction des informations de capacité de rendu, pour savoir si le terminal d'utilisateur a la capacité de rendu requise pour présenter le contenu AR.

6. Terminal d'utilisateur selon la revendication 5, dans lequel les informations de capacité de dispositif comprennent un identificateur de capacité de dispositif, et
le premier module d'interrogation (321) comprend :
un premier sous-module d'interrogation (3211), configuré pour interroger, en fonction de l'identificateur de capacité de dispositif et d'une interface de capacité de dispositif du terminal d'utilisateur, pour savoir si le terminal d'utilisateur a la capacité de dispositif requise pour présenter le contenu AR, et déterminer si le dispositif est activé ;
et
l'unité de traitement (33) comprend :
un premier module de traitement (331), configuré pour cacher le contenu AR si le terminal d'utilisateur n'a pas la capacité de dispositif; et
un deuxième module de traitement (332), configuré pour : si le terminal d'utilisateur a la capacité de dispositif et la capacité du dispositif n'est pas activée, cacher le contenu AR, ou activer automatiquement la capacité de dispositif, ou générer des informations d'invite pour inviter le terminal d'utilisateur à activer la capacité de dispositif.

7. Terminal d'utilisateur selon la revendication 5, dans lequel les informations de capacité de rendu comprennent un identificateur de capacité de rendu et des informations de capacité de rendu à distance qui correspondent à la capacité de rendu, dans lequel les informations de capacité de rendu à distance comprennent une adresse d'un serveur de rendu à distance ;
le deuxième module d'interrogation (322) comprend :
un deuxième sous-module d'interrogation (3221), configuré pour interroger, en fonction de l'identificateur de capacité de rendu, pour savoir si le terminal d'utilisateur a la capacité de rendu requise pour présenter le contenu AR ; et
l'unité de traitement (33) comprend :
un troisième module de traitement (333), configuré pour : si le terminal d'utilisateur n'a pas la capacité de rendu requise pour présenter le contenu AR, cacher le contenu AR ou obtenir, par l'adresse du serveur de rendu à distance, la capacité de rendu requise pour présenter le contenu AR

8. Système pour présenter un contenu de technologie de réalité augmentée, AR, comprenant le terminal d'utilisateur (41) selon l'une quelconque des revendications 5 à 7, et un serveur (42) configuré pour permettre au terminal d'utilisateur de télécharger des informations de point d'intérêt.
